# EUROPEAN PATENT APPLICATION

(11) **EP 3 352 324 A1**
(43) Date of publication of application: **25.07.2018**
(21) Application number: 17206648.2
(22) Date of filing: 12.12.2017
(51) Int. Cl.: H02J 7/00

(54) **CHARGE ADAPTER FOR TWO BATTERIES**

(30) Priority: 23.01.2017 JP 2017009762
(71) Applicant: Panasonic Intellectual Property Management Co., Ltd., Osaka-shi, Osaka 540-6207 (JP)
(72) Inventor: OKADA, Masaaki, Osaka-shi, Osaka 540-6207 (JP)
(74) Representative: Müller-Boré & Partner Patentanwälte PartG mbB

(57) **Abstract**

A first battery pack (10a) including a first mounting fixture (26a) that can be attached to or detached from an electric power tool is mounted to a first mount (42). A second battery pack (10b) including a second mounting fixture (26b) that can be attached to or detached from the electric power tool is mounted to a second mount (44). A charging controller (38) charges the second battery pack by using the first battery pack as a power supply while the first mounting fixture (26a) of the first battery pack (10a) is mounted to the first mount (42) and the second mounting fixture (26b) of the second battery pack (10b) is mounted to the second mount (44). A processing unit (32) controls charging by the charging controller (38).

## Description

The present invention relates to charge adapters for battery packs for electric power tools.

### Description of the Related Art

JP2012-110202 discloses a cordless charger for charging a battery pack for an electric power tool, wherein the cordless charger consists of a battery unit and an adapter unit that are attached to or detached from each other. The battery pack includes a charger connector exposed outside when the battery pack is mounted to the tool main body. The adapter unit includes a pack connector for electrical connection with the charger connector of the battery pack.

Electric power tools of cordless type provided with a battery pack that can be attached to or detached from the tool main body have been widely in use. The rear surface of the tool body is provided with a mount to which the battery pack is mounted. The mount is configured such that the only a battery pack of a predefined nominal voltage can be mechanically connected. Therefore, the user wishing to purchase a new tool main body should purchase a battery pack of a nominal voltage required by the new tool main body, if the new tool main body to be purchased is not compatible with the battery pack hitherto owned by the user.

However, an old battery pack having no problems in power supplying capability is too valuable to waste even if it cannot used for the new tool main body. Generally, a charger for a battery pack is configured to be capable of charging regardless of the nominal voltage of the battery pack so that no problem is posed in charging old battery packs.

We have studied technologies to exploit old battery packs and arrived at a technology of fully exploiting battery packs owned by the user as well as old battery packs.

In this background, a purpose of the present invention is to provide a technology for fully exploiting battery packs.

A charge adapter according to one embodiment comprises: a first mount to which a first battery pack including a first mounting fixture that can be attached to or detached from an electric power tool is mounted; a second mount to which a second battery pack including a second mounting fixture that can be attached to or detached from the electric power tool is mounted; a charging controller that charges the second battery pack by using the first battery pack as a power supply while the first mounting fixture of the first battery pack is mounted to the first mount and the second mounting fixture of the second battery pack is mounted to the second mount; and a processing unit that controls charging by the charging controller.

The figures depict one or more implementations in accordance with the present teaching, by way of example only, not by way of limitations. In the figures, like reference numerals refer to the same or similar elements.
Fig. 1 is a side view of an electric power tool;
Fig. 2 shows an exemplary appearance of the charge adapter according to the embodiment; and
Fig. 3 shows functional blocks of the charge adapter and the battery pack according to the embodiment.

One aspect of the invention will now be described by reference to the preferred embodiments. This does not intend to limit the scope of the present invention, but to exemplify the invention.

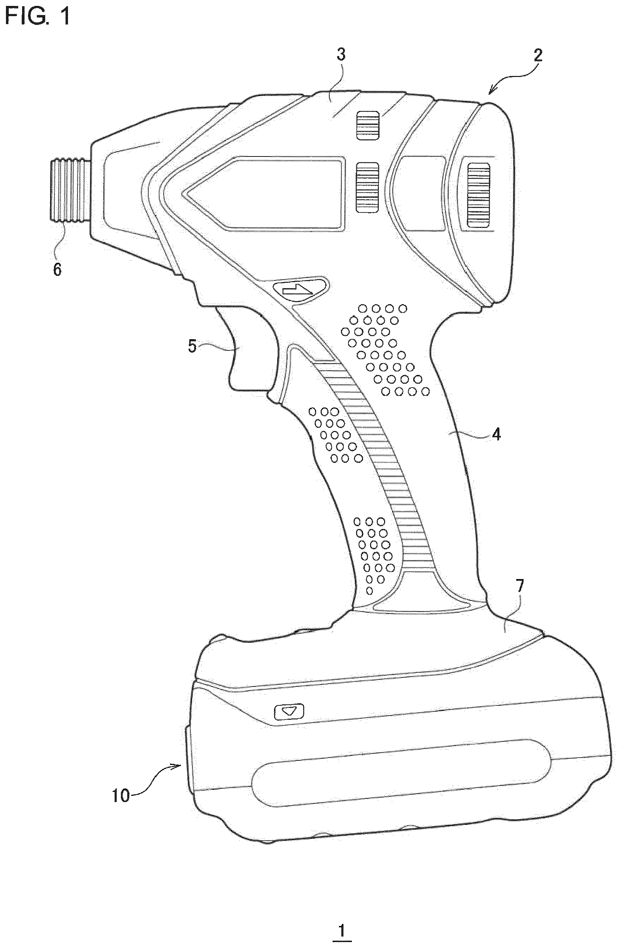

Fig. 1 is a side view of an electric power tool 1. The electric power tool 1 is provided with a tool main body 2 and a detachable battery pack 10 with a built-in secondary battery. The housing forming the outer package of the tool main body 2 includes a body part 3 of a bottomed cylinder shape, a grip 4 extending downward from the body part 3, and a base part 7 formed below the grip 4. The grip 4 is held by a user of the tool, and a user control switch 5 manipulated by the user is provided on the front face of the grip 4.

The body part 3 of the housing houses a driving and transmission mechanism such as a motor (driver), a deceleration mechanism for decelerating the motor rotation, and an output shaft rotated at a decelerated rotational speed, etc. A tool mount 6 to which a front-end tool such as a driver bit is mounted is provided on the front of the body part 3.

The battery pack 10 includes, on the top surface thereof, a mounting fixture that can be attached to or detached from the tool main body 2. The mounting fixture of the battery pack 10 is mechanically mounted to the mount provided on the rear surface of the base part 7. The mounting fixture of the battery pack 10 is provided with a power supply terminal including a positive voltage terminal and a negative voltage terminal, and a signal terminal. The mount of the base part 7 is also provided with a power supply terminal including a positive voltage terminal and a negative voltage terminal, and a signal terminal. When the mounting fixture of the battery pack 10 is mounted to the mount of the base part 7, the positive voltage terminals, the negative voltage terminals, and the signal terminals come into contact with each other, establishing electric connection. This causes the battery pack 10 to supply electric power to the tool main body 2 and also to transmit information related to the secondary battery to the tool main body 2.

The mount of the tool main body 2 is configured such that it can be fit only to the mounting fixture of the battery pack 10 of a predefined nominal voltage. The shape of the mounting fixture of the battery pack 10 is defined for respective nominal voltage. It is therefore impossible to mount the battery pack of a nominal voltage different from the required voltage to the tool main body 2. For full exploitation of a battery pack that cannot be mounted to the tool main body 2, we propose in this embodiment a charge adapter adapted to charge a battery pack that can be mounted to the tool main body 2, using a battery pack that cannot be mounted to the tool main body 2 as a power supply. According to the charge adapter of the embodiment, the battery pack used as a power supply may be a battery pack that can be mounted to the tool main body 2. The battery pack that is charged may be a battery pack that cannot be mounted to the tool main body 2.

Hereinafter, the battery pack used as a power supply will be referred to as "first battery pack" and the battery pack that is charged will be referred to as "second battery pack". The nominal voltages of the first battery pack and the second battery pack may be different or identical. In order to charge the second battery pack by using the first battery pack as a power supply, the battery voltage of the first battery pack should be higher than the battery voltage of the second battery pack.

The first battery pack and the second battery pack each includes a mounting fixture that can be attached to or detached from the electric power tool main body. Denoting the mounting fixture of the first battery pack as "a first mounting fixture" and the mounting fixture of the second battery pack as "a second mounting fixture2, the first mounting fixture and the second mounting fixture have the same shape, given that the nominal voltages of the battery packs are identical. If the nominal voltages of the battery packs differ, the first mounting fixture and the second mounting fixture have different shapes.

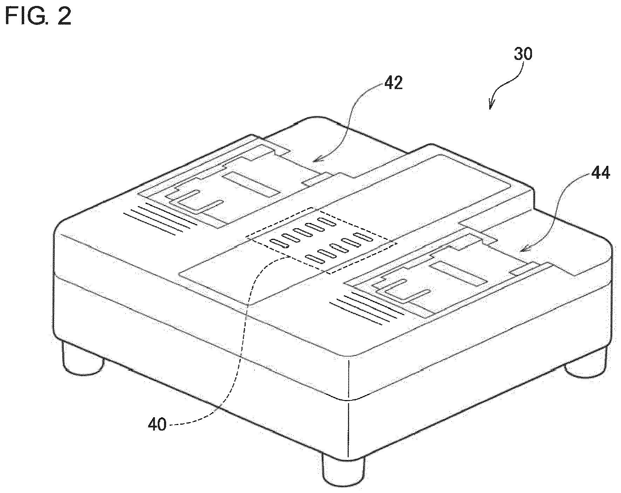

Fig. 2 shows an exemplary appearance of the charge adapter according to the embodiment. The charge adapter 30 is provided with a first mount 42 to which the first battery pack as a power supply is mounted, and a second mount 44 to which the second battery pack that is charged is mounted. The first mount 42 and the second mount 44 have the same structure and are configured such that battery packs of various nominal voltages can be mounted.

An alert unit 40 for presenting information related to charging is provided on the surface of the housing. The alert unit 40 may be implemented by one or more LEDs or by a liquid crystal panel. The alert unit 40 may have a function of outputting sound in addition to a function of displaying information. The information related to charging presented by the alert unit 40 may indicate that charging is terminated, or indicate the remaining battery life of at least one of the first battery pack and the second battery pack.

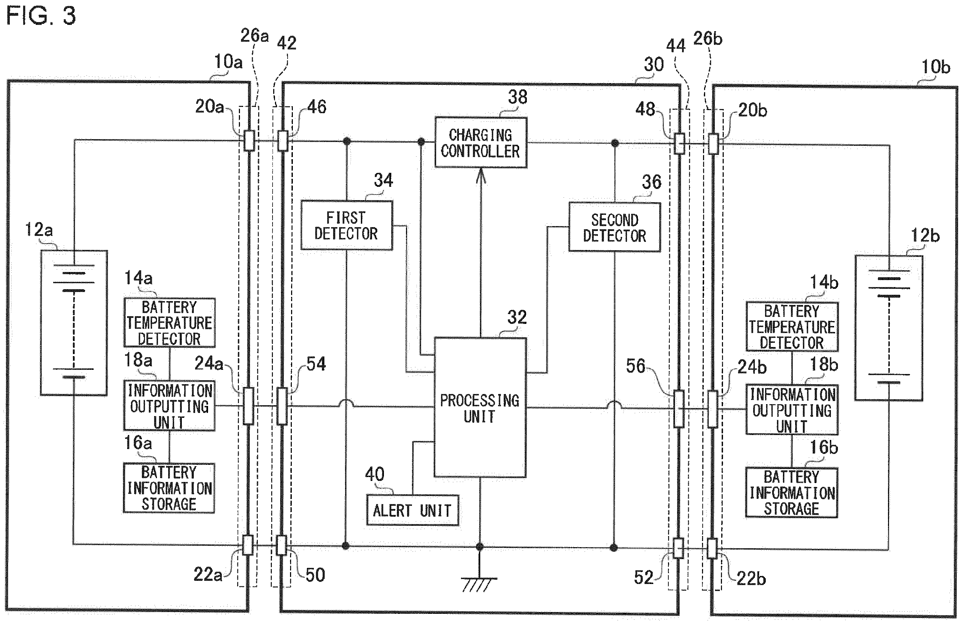

Fig. 3 shows functional blocks of the charge adapter and the battery pack according to the embodiment. The charge adapter 30 is operated by electric power from a first battery pack 10a.

The first battery pack 10a used as a power supply is provided with a secondary battery 12a consisting of a plurality of battery cells connected in series, a battery temperature detector 14a for detecting the battery temperature, a battery information storage 16a for storing information related to the secondary battery 12a, and an information outputting unit 18a. For example, the battery information storage 16a stores the identification information (pack ID) of the first battery pack 10a, the nominal voltage, discharge cutoff voltage, charge cutoff voltage, etc. of the secondary battery 12a. The discharge cutoff voltage and the charge cutoff voltage are the lower limit value and the upper limit value of the battery voltage defined for the purpose of protecting the secondary battery. The information outputting unit 18a outputs the information stored in the battery information storage 16a and the value detected by the battery temperature detector 14a to the charge adapter 30.

Similarly, the second battery pack 10b that is charged is provided with a secondary battery 12b consisting of a plurality of battery cells connected in series, a battery temperature detector 14b for detecting the battery temperature, a battery information storage 16b for storing information related to the secondary battery 12b, and an information outputting unit 18b. For example, the battery information storage 16b stores the pack ID of the second battery pack 10b, the nominal voltage, discharge cutoff voltage, charge cutoff voltage, etc. of the secondary battery 12b. The information outputting unit 18b outputs the information stored in the battery information storage 16b and the value detected by the battery temperature detector 14b to the charge adapter 30.

The first battery pack 10a includes a first mounting fixture 26a that can be attached to or detached from the electric power tool main body. When the first battery pack 10a is mounted to the charge adapter 30, the first mounting fixture 26a is mounted to the first mount 42 of the charge adapter 30. The first mounting fixture 26a is provided with a power supply terminal including a positive voltage terminal 20a and a negative voltage terminal 22a, and a signal terminal 24a.

The second battery pack 10b includes a second mounting fixture 26b that can be attached to or detached from the electric power tool main body. When the second battery pack 10b is mounted to the charge adapter 30, the second mounting fixture 26b is mounted to the second mount 44 of the charge adapter 30. The second mounting fixture 26b is provided with a power supply terminal including a positive voltage terminal 20b and a negative voltage terminal 22b, and a signal terminal 24b.

The charge adapter 30 includes the first mount 42 and the second mount 44. The first mount 42 is provided with a power supply terminal including a positive voltage terminal 46 and a negative voltage terminal 50, and a signal terminal 54. When the first mounting fixture 26a of the first battery pack 10a is mounted to the first mount 42, the positive voltage terminal 20a and the positive voltage terminal 46, the negative voltage terminal 22a and the negative voltage terminal 50, and the signal terminal 24a and the signal terminal 54 respectively and mutually come into contact with each other, establishing electric connection.

The second mount 44 is provided with a power supply terminal including a positive voltage terminal 48 and a negative voltage terminal 52, and a signal terminal 56. When the second mounting fixture 26b of the second battery pack 10b is mounted to the second mount 44, the positive voltage terminal 20b and the positive voltage terminal 48, the negative voltage terminal 22b and the negative voltage terminal 52, and the signal terminal 24b and the signal terminal 56 respectively and mutually come into contact with each other, establishing electric connection.

According to the charge adapter 30 of the embodiment, the first mounting fixture 26a provided in the first battery pack 10a and the second mounting fixture 26b provided in the second battery pack 10b can be directly mounted to the first mount 42 and the second mount 44 of charge adapter 30. For this reason, the charge adapter 30 is capable of charging the second battery pack 10b by using the first battery pack 10a as a power supply, without modifying the structure of the first battery pack 10a and the second battery pack 10b.

A charging controller 38 charges the second battery pack 10b by using the first battery pack 10a as a power supply while the first mounting fixture 26a is mounted to the first mount 42 and the second mounting fixture 26b is mounted to the second mount 44. The charging controller 38 consists of a switching element such as a transistor or a MOSFET, and a processing unit 32 controls charging by the charging controller 38.

A first detector 34 detects the battery voltage of the secondary battery 12a and supplies the detected voltage to the processing unit 32. A second detector 36 detects the battery voltage of the secondary battery 12b and supplies the detected voltage to the processing unit 32. In this embodiment, the first detector 34 and the second detector 36 detect the battery voltage of the secondary battery 12a and the secondary battery 12b, respectively. In an alternative example, the detectors may detect an output current of the secondary battery 12a and the secondary battery 12b. The processing unit 32 has a function of controlling charging by the charging controller 38 based on the value detected by the first detector 34 and the value detected by the second detector 36.

When the first battery pack 10a is mounted to the first mount 42, the information outputting unit 18a outputs the information related to the secondary battery 12a stored in the battery information storage 16a to the processing unit 32. The processing unit 32 acquires the information related to the secondary battery 12a via the signal terminal 24a and the signal terminal 54. The acquired information includes the pack ID of the first battery pack 10a, the nominal voltage, discharge cutoff voltage, charge cutoff voltage, etc. of the secondary battery 12a.

Similarly, when the second battery pack 10b is mounted to the second mount 44, the information outputting unit 18b outputs the information related to the secondary battery 12b stored in the battery information storage 16b to the processing unit 32. The processing unit 32 acquires the information related to the secondary battery 12b via the signal terminal 24b and the signal terminal 56. The acquired information includes the pack ID of the second battery pack 10b, the nominal voltage, discharge cutoff voltage, charge cutoff voltage, etc. of the secondary battery 12b.

In order to charge the second battery pack 10b by using the first battery pack 10a as a power supply, the battery voltage of the secondary battery 12a should be higher than the battery voltage of the secondary battery 12b. The processing unit 32 has a function of controlling charging by the charging controller 38 based on the value detected by the first detector 34 and the value detected by the second detector 36. If the battery voltage detected by the first detector 34 is lower than the battery voltage detected by the second detector 36, the processing unit 32 determines that the battery cannot be charged and does not charge the battery by the charging controller 38.

If the battery voltage detected by the first detector 34 is higher than the battery voltage detected by the second detector 36, the processing unit 32 controls the switching element of the charging controller 38 and starts charging the battery. After the battery starts to be charged, the processing unit 32 controls charging by the charging controller 38 based on the information related to the secondary battery 12a and the information related to the secondary battery 12b.

After the battery starts to be charged, the processing unit 32 compares the battery voltage of the secondary battery 12b with the charge cutoff voltage of the secondary battery 12b. When the battery voltage of the secondary battery 12b reaches the charge cutoff voltage, the processing unit 32 determines that the secondary battery 12b has been completely charged and stops charging by the charging controller 38.

While the battery is being charged, the processing unit 32 compares the battery voltage of the secondary battery 12a with the discharge cutoff voltage of the secondary battery 12a. When the battery voltage of the secondary battery 12a drops to the discharge cutoff voltage, the processing unit 32 enforces termination of charging by the charging controller 38. In this state, the secondary battery 12b is not fully charged, but the processing unit 32 prevents deterioration of the battery property of the secondary battery 12a by enforcing termination of charging.

Further, the processing unit 32 monitors the value detected by the battery temperature detector 14a and the value detected by the battery temperature detector 14b while the battery is being charged. The battery temperature of the secondary battery 12a indicated by the value detected by the battery temperature detector 14a and the battery temperature of the secondary battery 12b indicated by the value detected by the battery temperature detector 14b are preferably output periodically to the processing unit 32. The processing unit 32 immediately enforces termination of charging by the charging controller 38 when the battery temperature of one of the secondary battery 12a and the secondary battery 12b reaches a predefined temperature. In this way, the processing unit 32 prevents deterioration of the battery property of the secondary battery 12a and/or the secondary battery 12b.

The alert unit 40 presents that charging has been terminated. When charging has been terminated, the processing unit 32 controls the alert unit 40 to present that charging has been terminated. It should be noted that charging is terminated in the charge adapter 30 in a variety of manners as described above. For this reason, it is preferable for the alert unit 40 to use different modes of presentation depending on the mode of termination of charging. For example, the alert unit 40 may implement different modes of presenting termination of charging by using the color emitted by an LED. Where a plurality of LEDs are provided, the LED that is lighted may differ depending on the mode of termination of charging. The user can know how charging is terminated by referring to the mode of presenting termination of charging.

In particular, if charging is terminated due to a high battery temperature, the processing unit 32 resumes charging after the battery temperature drops. It is therefore preferable for the alert unit 40 to present that charging is temporarily suspended so that the user can distinguish from other modes of termination of charging.

The processing unit 32 may cause the alert unit 40 to present the remaining battery life of at least one of the first battery pack 10a and the second battery pack 10b during charging. The alert unit 40 may include an indicator to display the battery life to display the remaining battery life of at least one of the secondary battery 12a and the secondary battery 12b. By causing the alert unit 40 present the remaining battery, the user can know the situation of charging.

Described above is an explanation based on an exemplary embodiment. The embodiment is intended to be illustrative only and it will be understood by those skilled in the art that various modifications to constituting elements and processes could be developed and that such modifications are also within the scope of the present invention.

The information related to the secondary battery acquired by the processing unit 32 according to the embodiment is described as including the pack ID, nominal voltage, discharge cutoff voltage, and charge cutoff voltage. In one variation, the information related to the secondary battery acquired by the processing unit 32 may only include the pack ID, and the processing unit 32 may acquire the nominal voltage, etc. associated with the pack ID from a database (not shown). Alternatively, the processing unit 32 may acquire the nominal voltage etc. based on the battery voltage.

The embodiment is described as being configured to charge the second battery pack 10b mounted to the second mount 44 by using the first battery pack 10a mounted to the first mount 42 as a power supply. In one variation, the charging controller 38 may be provided with a switching element capable of bidirectional charging and the processing unit 32 may be configured to set the charging direction as appropriate. In this case, the user may mount the first battery pack 10a and the second battery pack 10b to whichever of the first mount 42 and the second mount 44. The charging controller 38 under the control of the processing unit 32 is capable of charging the second battery pack 10b by using the first battery pack 10a as a power supply.

One embodiment of the present invention is summarized below. A charge adapter (30) according to one embodiment of the present invention comprises: a first mount (42) to which a first battery pack (10a) including a first mounting fixture (26a) that can be attached to or detached from an electric power tool is mounted; a second mount (44) to which a second battery pack (10b) including a second mounting fixture (26b) that can be attached to or detached from the electric power tool is mounted; a charging controller (38) that charges the second battery pack by using the first battery pack as a power supply while the first mounting fixture (26a) of the first battery pack is mounted to the first mount (42) and the second mounting fixture (26b) of the second battery pack is mounted to the second mount (44); and a processing unit (32) that controls charging by the charging controller (38).

The first mount (42) may include power supply terminals (46, 50) and a signal terminal (54) connected to power supply terminals (20a, 22a) and a signal terminal (24a) provided in the first mounting fixture (26a) of the first battery pack (10a), and the second mount (44) may be provided with power supply terminals (48, 52) and a signal terminal (56) connected to power supply terminals (20b, 22b) and a signal terminal (24b) provided in the second mounting fixture (26b) of the second battery pack (10b).

The processing unit (32) may control charging by the charging controller (38) based on information related to a secondary battery (12a) of the first battery pack and information related to a secondary battery (12b) of the second battery pack.

The charge adapter (30) may further comprise a first detector (34) that detects a voltage or an electric current of the first battery pack and a second detector (36) that detects a voltage or an electric current of the second battery pack, and the processing unit (32) may control charging by the charging controller (38) based on a value detected by the first detector and a value detected by the second detector.

The charge adapter (30) may further comprise an alert unit (40) that presents that charging is terminated. The alert unit (40) may use different modes of presentation depending on a mode of termination of charging. The alert unit (40) may present a remaining battery life of at least one of the first battery pack and the second battery pack.

While the foregoing has described what are considered to be the best mode and/or other examples, it is understood that various modifications may be made therein and that the subject matter disclosed herein may be implemented in various forms and examples, and that they may be applied in numerous applications, only some of which have been described herein. It is intended by the following claims to claim any and all modifications and variations that fall within the true scope of the present teachings.

## Claims

1. A charge adapter (30) comprising:
a first mount (42) to which a first battery pack (10a) including a first mounting fixture (26a) that can be attached to or detached from an electric power tool is mounted;
a second mount (44) to which a second battery pack (10b) including a second mounting fixture (26b) that can be attached to or detached from the electric power tool is mounted;
a charging controller (38) that charges the second battery pack by using the first battery pack as a power supply while the first mounting fixture (26a) of the first battery pack is mounted to the first mount (42) and the second mounting fixture (26b) of the second battery pack is mounted to the second mount (44); and
a processing unit (32) that controls charging by the charging controller (38).

2. The charge adapter (30) according to claim 1, wherein
the first mount (42) includes power supply terminals (46, 50) and a signal terminal (54) connected to power supply terminals (20a, 22a) and a signal terminal (24a) provided in the first mounting fixture (26a) of the first battery pack (10a), and
the second mount (44) includes power supply terminals (48, 52) and a signal terminal (56) connected to power supply terminals (20b, 22b) and a signal terminal (24b) provided in the second mounting fixture (26b) of the second battery pack (10b).

3. The charge adapter (30) according to claim 1 or 2, wherein
the processing unit (32) controls charging by the charging controller (38) based on information related to a secondary battery (12a) of the first battery pack and information related to a secondary battery (12b) of the second battery pack.

4. The charge adapter (30) according to any one of claims 1 to 3, further comprising:
a first detector (34) that detects a voltage or an electric current of the first battery pack; and
a second detector (36) that detects a voltage or an electric current of the second battery pack, wherein
the processing unit (32) controls charging by the charging controller (38) based on a value detected by the first detector and a value detected by the second detector.

5. The charge adapter (30) according to any one of claims 1 to 4, further comprising;
an alert unit (40) that presents that charging is terminated.

6. The charge adapter (30) according to claim 5, wherein
the alert unit (40) uses different modes of presentation depending on a mode of termination of charging.

7. The charge adapter (30) according to claim 5 or 6, wherein
the alert unit (40) presents a remaining battery life of at least one of the first battery pack and the second battery pack.
